# EUROPÄISCHE PATENTANMELDUNG

(11) **EP 1 333 257 A1**
(43) Veröffentlichungstag der Anmeldung: **06.08.2003**
(21) Anmeldenummer: 03001149.8
(22) Anmeldetag: 21.01.2003
(51) Int. Cl.: G01G 3/08, G01G 19/415, G01G 23/00

(54) **Anordnung zur Überwachung des Füllungsgrades von einzelnen Behältern in einem Lagersystem**

(30) Priorität: 01.02.2002 DE 10204104
(71) Anmelder: SFS Handels Holding AG, CH-9435 Heerbrugg (CH)
(72) Erfinder: Keel, Daniel, 9444 Diepoldsau (CH)
(74) Vertreter: Ludescher, Hans

(57) **Zusammenfassung**

Anordnung zur Überwachung des Füllungsgrades von einzelnen Behältern (14) in einem Lagersystem. Jedem einzelnen Behälter (14) ist ein Wägesystem (18) zugeordnet, auf dem der Behälter aufliegt und dem ein Schaltelement (19) zugeordnet ist, das ab einer bestimmten Menge (M) des Inhalts (16) des Behälters (14) einen Schaltvorgang auslöst. Das Wägesystem (18) weist ein Federparallelogramm (20) auf, das mit einer ersten Seite (21) an der Unterseite von einer für die Abstützung des Behälters (14) vorgesehenen Auflagefläche (12) befestigt ist und mit einer gegenüberliegenden zweiten Seite (22) auf einem festen Untergrund (30) verankert ist. Das Federparallelogramm (20) ist mittels eines Schiebers (32) so einstellbar, daß es die Kraft für das Behältergewicht mit der Mindestmenge (M) seines Inhalts (16) aufbringt. Bei Überschreiten der Mindestmenge (M) bewegt sich der Behälter (14) abwärts. Bei wieder abnehmender Menge seines Inhalts (16) bewegt sich der Behälter (14) aufwärts und betätigt bei Erreichen der Mindestmenge (M) das Schaltelement (19), damit der Schaltvorgang ausgelöst wird.

## Beschreibung

Die Erfindung betrifft eine Anordnung der im Oberbegriff des Patentanspruchs 1 angegebenen Art.

Eine solche Anordnung bildet den Gegenstand der älteren deutschen Patentanmeldung Nr. 100 60 147.2, die gemäß § 3 Abs. 2 PatG zu berücksichtigen ist.

Solche Anordnungen zur Überwachung des Füllungsgrades einzelner Behälter in einem Lagersystem werden eingesetzt, um rechtzeitig einen zu Ende gehenden Lagervorrat eines bestimmten Gegenstandes feststellen zu können oder um eine vollautomatische Lagerbewirtschaftung zu ermöglichen. In der Regel wird diese Überwachung durch Sichtkontrolle ausgeführt oder aber durch komplizierte und teure elektronische Messvorrichtungen. Insbesondere dann, wenn es um die Lagerhaltung von kleinen Massenteilen wie Schrauben od.dgl. geht, ist es notwendig, eine wirksame Lagerüberwachung durchführen zu können.

Die eingangs erwähnte ältere deutsche Patentanmeldung beschreibt eine Anordnung zur Überwachung des Füllungsrades einzelner Behälter in einem Lagersystem, bei der jedem einzelnen Behälter ein von miteinander zusammenwirkenden Hebeln gebildetes Wägesystem zugeordnet ist. Diese Hebel greifen an zwei einander gegenüberliegenden Endabschnitten an den Behältern oder an einer Auflagefläche für die Behälter an. Dem Wägesystem ist ein Schaltelement zugeordnet, welches bei Unterschreiten einer Mindestmenge beim Inhalt eines Behälters einen Schaltvorgang oder einen Steuerbefehl auslöst. Das Wägesystem ist von zwei miteinander in Wirkverbindung stehenden Lasthebeln gebildet, deren eine Enden das vordere oder hintere Ende eines Behälters oder einer für die Abstützung von Behältern vorgesehenen Auflagefläche abstützen und zur Bildung eines Hebelarmes mit Abstand von diesem Abstützbereich gegenüber dem festen Untergrund verschwenkbar aufliegen. Die beiden anderen Hebelarme der somit zweiarmigen Lasthebel sind gegeneinander gerichtet, wobei deren Endabschnitte in eine gemeinsame Halterung eingreifen. Ein Hebelarm des einen Lasthebels ist über diese Halterung hinaus verlängert, und das Schaltelement ist im Verschwenkbereich dieser Verlängerung angeordnet. Bei dem so aufgebauten Wägesystem hat die Lage des Füllgutes der Behälter einen relativ großen Einfluß auf den Wiegevorgang. Es muß daher darauf geachtet werden, dass kleine Massenteile wie Schrauben od.dgl. möglichst gleichmäßig in den Behältern verteilt werden und verteilt bleiben oder dass den Behälterinhalt bildende größere Teile möglichst mittig oder symmetrisch zur Mitte in dem Behälter angeordnet werden und bleiben, damit die Position des Füllgutes in den Behältern die Messung möglichst wenig beeinflußt.

Aufgabe der Erfindung ist es, eine Anordnung der im Oberbegriff des Patentanspruchs 1 angegebenen Art so auszubilden, daß der Einfluß der Position des Füllgutes in den Behältern auf die Messung möglichst gering gehalten wird.

Diese Aufgabe ist erfindungsgemäß durch eine Anordnung mit den Merkmalen des Patentanspruchs 1 gelöst.

Bei der Anordnung nach der Erfindung besteht das Wägesystem nicht aus Hebeln, sondern aus einem Federparallelogramm. Im Gegensatz zu dem bekannten Wägesystem, das von miteinander zusammenwirkenden Hebeln gebildet ist, die an zwei Enden des Behälters angreifen und benachbart zu diesen beiden Enden auf einem Untergrund abgestützt sind, ist bei der Anordnung nach der Erfindung der Behälter oder eine für die Abstützung des Behälters vorgesehene Auflagefläche durch die erste Seite des das Wägesystem bildenden Federparallelogramms wenigstens mittig abgestützt, wogegen die der ersten Seite gegenüberliegende zweite Seite des Federparallelogramms auf dem Untergrund befestigt ist. Dadurch wird der Einfluß der Position des Füllguts des Behälters auf die Messung gering gehalten. Mittels des Federparallelogramms wird die Kraft zum Aufnehmen des Gewichts des Behälters und der Mindestmenge des Füllgutes aufgebracht. Sobald die Mindestmenge des Füllgutes überschritten wird, bewegt sich der Behälter abwärts, da sich die Federn des Federparallelogramms, die als dritte und vierte Seite des Federparallelogramms zwischen der ersten und der zweiten Seite des Federparallelogramms eingespannt sind, durchbiegen und sich an ihrem der ersten Seite des Federparallelogramms benachbarten Ende mit dem Behälter abwärts bewegen. Sobald der Inhalt des Behälters durch Entnahme von Füllgut wieder abnimmt, bewegt sich der Behälter wieder aufwärts, bis ab dem Wiedererreichen der Mindestmenge seines Inhalts ein Schaltelement betätigt und damit ein Schaltvorgang oder Steuerbefehl ausgelöst wird.

Es wird durch die Erfindung die Möglichkeit geschaffen, einen zu Ende gehenden Vorrat in einem Behälter mit Hilfe des Wägesystems zu ermitteln, welches z.B. bei Unterschreiten eines vorbestimmten Gewichts von Behälter und Inhalt zu einer bestimmten Anzeige direkt vor Ort oder aber auch in einer Kontrollstation führt oder aber auch direkt ein Nachfüllen oder eine Nachbestellung auslösen kann.

Vorteilhafte Ausgestaltungen der Erfindung bilden die Gegenstände der Unteransprüche.

Wenn in einer Ausgestaltung der Anordnung nach der Erfindung das Federparallelogramm wenigstens eine obere und wenigstens eine untere Blattfeder aufweist, die eine dritte bzw. vierte Seite des Federparallelogramms bilden und an deren Enden an der ersten bzw. zweiten Seite befestigt und starr miteinander verbunden sind, lassen sich Gewichtsabstufungen für die zu erfassende Mindestmenge durch gezieltes Auslegen der Blattfedern festlegen, indem Breite, Länge, Höhe und/oder Dicke derselben variiert werden. Eine Feineinstellung kann in diesem Fall an dem Schaltelement erfolgen, z.B. durch Einstellen von dessen Position.

Wenn in einer weiteren Ausgestaltung der Anordnung nach der Erfindung das Federparallelogramm zwei zueinander parallele obere Blattfedern und zwei zueinander parallele untere Blattfedern aufweist, lassen sich der zu erfassende Gewichtsbereich erweitern und die Lage des Behälters auf einfache Weise stabilisieren, so daß auch unsymmetrisch eingebrachtes oder zurückbleibendes Füllgut in dem Behälter keine Verwindung des Federparallelogramms verursacht.

Wenn in weiterer Ausgestaltung der Anordnung nach der Erfindung die erste und die zweite Seite des Federparallelogramms jeweils von einem Befestigungsteil gebildet sind, die jeweils aus zwei Halteplatten bestehen, zwischen denen die obere(n) Blattfeder(n) bzw. die untere(n) Blattfeder(n) eingespannt ist (sind), wobei die Dicke der Halteplatten die Länge der ersten bzw. zweiten Seite des Federparallelogramms festlegt, lassen sich die Blattfedern auf einfache Weise mit den Befestigungsteilen mit Hilfe von Befestigungselementen verbinden, wobei die Befestigungselemente garantieren, daß die Blattfedern gleich lang sind und sich nicht verschieben können.

Wenn in weiterer Ausgestaltung der Anordnung nach der Erfindung zwischen den Seiten des Federparallelogramms ein Schieber angeordnet ist, läßt sich das durch das Wägesystem erfaßbare Gewicht bequem einstellen, weil die wirksame Länge der Blattfedern durch Verfahren des Schiebers einstellbar ist.

Wenn in einer weiteren Ausgestaltung der Anordnung nach der Erfindung der Schieber zwischen der ersten und der zweiten Seite des Federparallelogramms und auf dem Untergrund verschiebbar ist und die dritte Seite und die vierte Seite des Federparallelogramms auf dem Untergrund abstützt, ist die Gewichtsverstellung mit dem Schieber einfach und reproduzierbar möglich.

Wenn in einer weiteren Ausgestaltung der Anordnung nach der Erfindung der Behälter oder dessen Auflagefläche ein mit dem Schaltelement in Wirkverbindung bringbares Betätigungsteil aufweist und das Schaltelement fest, aber einstellbar mit dem Untergrund verbunden ist, läßt sich mit Hilfe des Behälters auf einfache Weise das Schaltelement betätigen, wobei in einer weiteren Ausgestaltung der Anordnung nach der Erfindung das Schaltelement ein Taster oder ein Reed-Element sein kann.

Wenn in einer weiteren Ausgestaltung der Anordnung nach der Erfindung die Auflagefläche des Behälters als eine Platte mit nach unten und/oder nach oben abgebogenen Abkantungen ausgeführt ist, wird der Auflagefläche dadurch eine besondere Stabilität verliehen.

Wenn in einer weiteren Ausgestaltung der Anordnung nach der Erfindung die Auflagefläche jedes Behälters mit einer rutschfesten Oberfläche ausgeführt und/oder mit Markierungsfeldern versehen ist, so daß der Behälter definiert auf der Auflagefläche festlegbar ist, ist eine optimale Aufnahmemöglichkeit für die Behälter geschaffen. An sich hat diese Maßnahme nichts mit dem Wägesystem zu tun, denn auch bei nicht ordnungsgemäßer Auflage von Behältern auf eine Auflagefläche wirkt die erfindungsgemäße Anordnung in gleicher Weise optimal. Eine exakte Lagerung und somit auch eine Verschiebesicherung der Behälter ist aber insofern von Vorteil, als dadurch ausgeschlossen werden kann, daß Behälter mit benachbarten Auflageflächen in Wirkverbindung kommen und so zu Störungen führen können.

Wenn in einer weiteren Ausgestaltung der Anordnung nach der Erfindung die erste Seite des Federparallelogramms zusätzlich über wenigstens eine Auflagestrebe die Unterseite des Behälters oder eine für die Abstützung des Behälters vorgesehene Auflagefläche abstützt, läßt sich durch das Federparallelogramm der Behälter auf einfache Weise nicht nur mittig abstützen.

Wenn in einer weiteren Ausgestaltung der Anordnung nach der Erfindung die Auflagestrebe beiderseits der ersten Seite und mit gleichem Abstand von derselben zwei Auflagestellen aufweist, läßt sich der Behälter wie bei der Anordnung gemäß der eingangs erwähnten älteren deutschen Patentanmeldung an seinen Enden aufnehmen, wird aber trotzdem durch das Federparallelogramm mittig abgestützt.

Wenn in einer weiteren Ausgestaltung der Anordnung nach der Erfindung der Abstand etwa gleich der gegenseitigen Distanz der ersten und zweiten Seite des Federparallelogramms ist, läßt sich der Behälter an einem Ende über der zweiten Seite und am anderen Ende spiegelbildlich dazu bezüglich der Behältermitte abstützen, so daß die Abstützung des Behälters selbst, die somit mittig und außermittig erfolgt, von der Lage des Inhalts des Behälters relativ unbeeinflußt bleibt.

Ausführungsbeispiele der Erfindung werden im folgenden unter Bezugnahme auf die Zeichnungen näher beschrieben. Es zeigt:
Fig. 1 einen in Schrägansicht dargestellten Bereich eines Lagersystems mit mehreren Auflageflächen für Behälter, wobei ein Behälter aufgesetzt dargestellt ist;
Fig. 2 einen in Schrägansicht dargestellten Bereich eines Lagersystems mit mehreren Auflageflächen für Behälter, wobei auf alle Auflageflächen Behälter aufgesetzt dargestellt sind;
Fig. 3 eine Seitenansicht eines Behälters mit zugeordnetem Wägesystem, wobei ein Zustand dargestellt ist, in welchem eine Mindestmenge des Füllgutes des Behälters unterschritten oder gerade erreicht ist;
Fig. 4 eine Seitenansicht eines Behälters mit zugeordnetem Wägesystem, wobei ein Zustand dargestellt ist, in welchem die Mindestmenge überschritten ist,
Fig. 5 eine Draufsicht auf das Wägesystem nach der Linie V-V in Fig. 3,
Fig. 6 als Einzelheit und in perspektivischer Darstellung eine Ausführungsform eines bei der Anordnung nach der Erfindung eingesetzten Federparallelogramms, und
Fig. 7 das Federparallelogramm nach Fig. 6 zusammen mit zwei Auflagestreben zur Verbindung des Federparallelogramms mit der Unterseite eines Behälters oder mit einer für die Abstützung des Behälters vorgesehenen Auflagefläche.

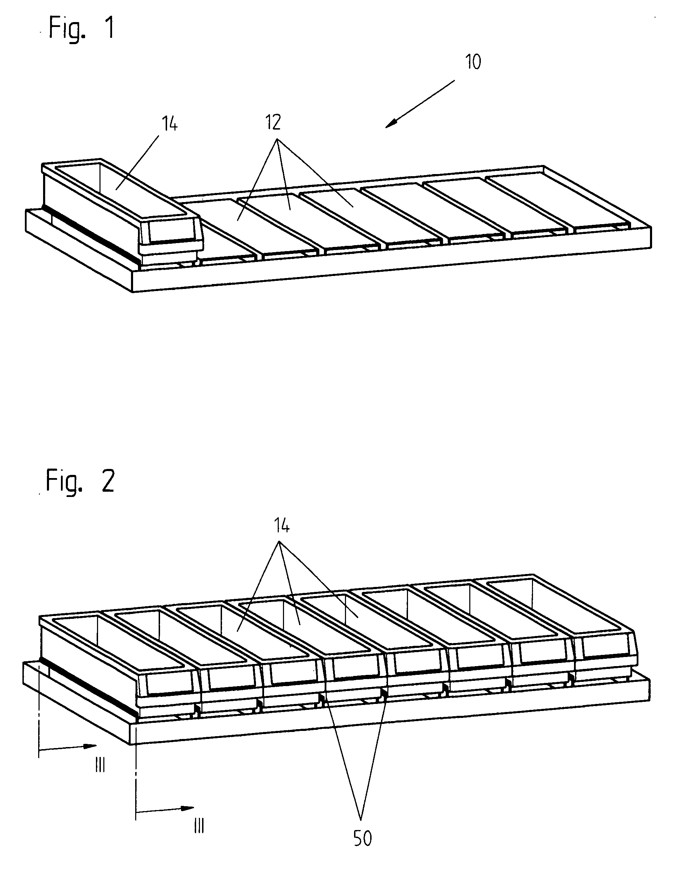

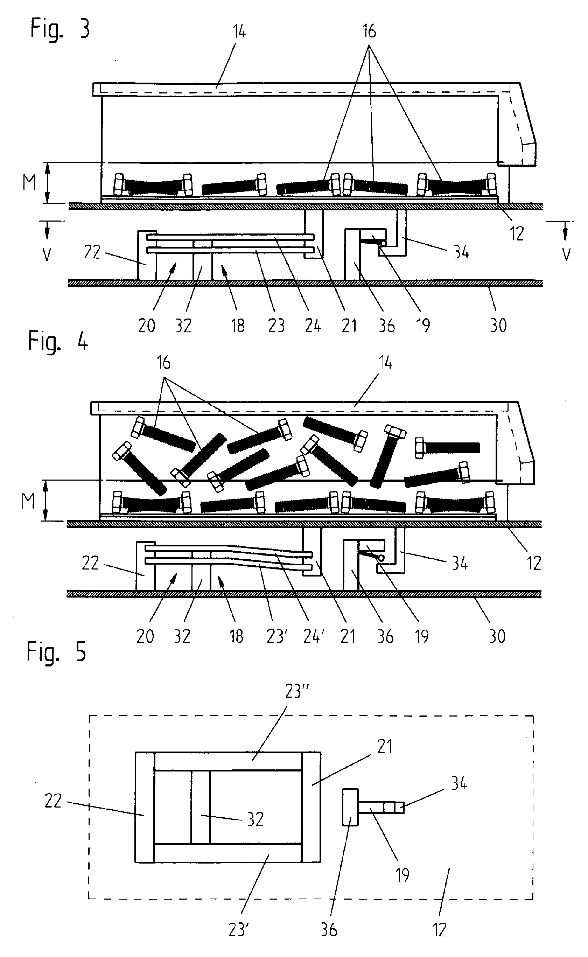

Fig. 1 zeigt einen in Schrägansicht dargestellten Bereich eines insgesamt mit 10 bezeichneten Lagersystems mit mehreren Auflageflächen 12 für Behälter 14, von denen in Fig. 1 nur einer dargestellt ist. In Fig. 2 sind alle Auflagenflächen 12 mit aufgesetztem Behälter 14 gezeigt. In den Fig. 3 und 4 ist das Lagersystem 10 im Schnitt nach der Linie III - III in Fig. 2 gezeigt. In den Fig. 3 und 4 sind als Inhalt 16 für die Behälter kleine Massenteile gezeigt, bei denen es sich hier um Schrauben handelt. Die hier beschriebene Anordnung ist gleichermaßen für ein Lagersystem geeignet, in dessen Behälter jede Art von metallischen oder nichtmetallischen Massenteilen oder irgendwelchen Ersatzteilen oder sonstige in einem Lagersystem geordnet aufzubewahrende Teile oder Werkstücke eingelagert werden. Die hier beschriebene Anordnung eignet sich zwar in gleicher Weise für alle möglichen Medien, die in die Behälter einzufüllen sind, wie z.B. Flüssigkeiten, die besonderen Vorzüge der beschriebenen Anordnung zeigen sich jedoch, wenn der Inhalt 16 in den Behältern 14 einseitig oder unsymmetrisch eingelagert wird. Diese besonderen Vorteile ergeben sich durch ein jedem einzelnen Behälter 14 zugeordnetes, in den Fig. 3 und 4 insgesamt mit 18 bezeichnetes Wägesystem, auf dem der Behälter 14 aufliegt und dem ein Schaltelement 19 zugeordnet ist, das ab einer bestimmten Mindesthöhe oder Mindestmenge M des Inhalts 16 des Behälters 14 einen Schaltvorgang oder einen Steuerbefehl auslöst.

Das Wägesystem 18 wird von einem Federparallelogramm 20 gebildet. Das Federparallelogramm 20 ist mit einer ersten Seite 21 an der für die Abstützung des Behälters 14 vorgesehenen Auflagefläche 12 befestigt und mit einer der ersten Seite 21 gegenüberliegenden zweiten Seite 22 auf einem festen Untergrund 30 verankert. Der feste Untergrund 30 kann z.B. der Boden eines Lagerregals, eine Tischplatte in einem Ersatzteillager, ein Bodenblech des Lagersystems 10 oder irgendeine andere feste Fläche sein. Das Federparallelogramm 20 hat weiter eine dritte Seite 23 und eine vierte Seite 24, die jeweils von wenigstens einer unteren Blattfeder bzw. wenigstens einer oberen Blattfeder gebildet sind. Die Enden der dritten und der vierten Seite 23, 24 des Federparallelogramms sind einerseits an der ersten Seite 21 und andererseits an der zweiten Seite 22 des Federparallelogramms 20 befestigt und so einerseits durch die erste Seite 21 starr miteinander verbunden und andererseits durch die zweite Seite 22 starr miteinander verbunden. Die erste Seite 21 und die zweite Seite 22 sind in dem Ausführungsbeispiel nach den Fig. 3 und 4 jeweils ein starres Befestigungsteil, das mittig mit der Auflagefläche 12 fest verbunden ist bzw. auf dem Boden 30 fest verankert ist. Ein Schieber 32 ist zwischen den Seiten des Federparallelogramms 20 angeordnet. Bei dem in den Fig. 3 und 4 dargestellten Ausführungsbeispiel ist der Schieber 32 zwischen der ersten und der zweiten Seite 21, 22 des Federparallelogramms 20 und auf dem Untergrund 30 verschiebbar und stützt die dritte Seite 23 und die vierte Seite 24 des Federparallelogramms auf dem Untergrund 30 ab. Der Schieber 32 kann als ein geschlitzter Quader ausgebildet sein, dessen Schlitz die die dritte Seite 23 bildende Blattfeder verschiebbar aufnimmt.

An der Auflagefläche 12 ist ein mit dem Schaltelement 19 in Wirkverbindung bringbares Betätigungsteil 34 befestigt. Das Schaltelement 19 selbst ist über eine Art Pfosten 36 mit dem Untergrund 30 fest verbunden. Das Schaltelement kann ein Taster sein, wie er in den Fig. 3 und 4 angedeutet ist, oder aber ein Reed-Element, das durch einen Permanentmagnet (nicht dargestellt), der an dem Betätigungsteil 34 befestigt sein würde, betätigt wird.

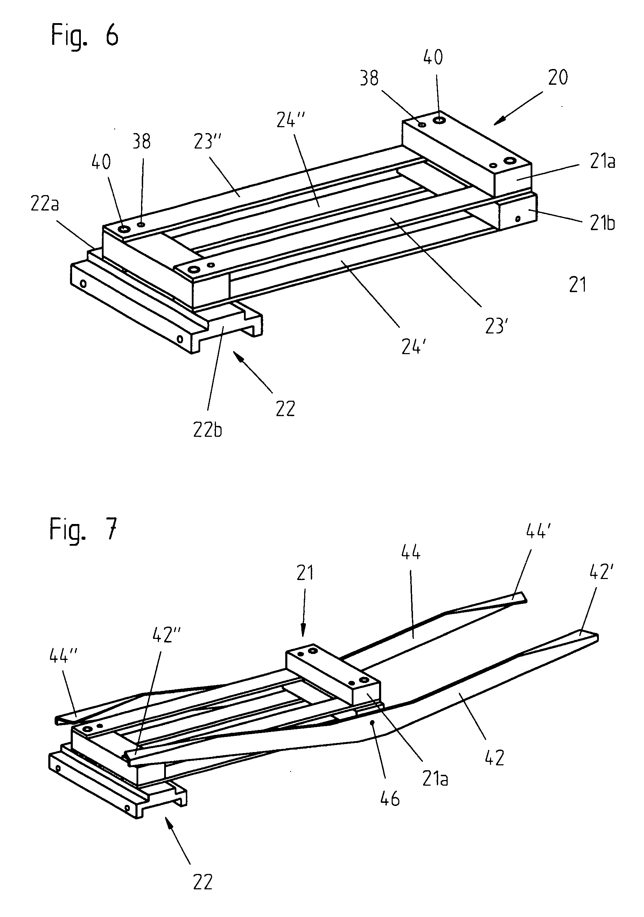

In Fig. 5 ist das Wägesystem 18 in einer Draufsicht nach der Linie V - V in Fig. 3 dargestellt. In Fig. 5 ist auch zu erkennen, daß das Federparallelogramm zwei obere Blattfedern 23', 23" aufweist, welche die dritte Seite 23 des Federparallelogramms 20 bilden. Ebenso weist das Federparallelogramm 20 zwei untere Blattfedern 24', 24" auf, welche die vierte Seite 24 des Federparallelogramms 20 bilden, aber nur bei den in den Fig. 6 und 7 dargestellten Ausführungsbeispielen sichtbar sind, die weiter unten näher beschrieben werden.

Die Auflagefläche 12 für jeweils einen Behälter 14 kann als Platte mit nach unten und/oder nach oben abgebogenen Abkantungen ausgeführt sein. Es wäre auch denkbar, zwischen den Auflageflächen 12 für einzelne Behälter 14 Stege (nicht dargestellt) vorzusehen, die ein seitliches Verschieben von auf benachbarte Auflageflächen 12 aufgesetzten Behältern 14 verhindern würden. Solche Stege könnten auch leicht entfernbar vorgesehen werden. Ferner kann die Auflagefläche 12 mit einer rutschfesten Oberfläche, beispielsweise mit einer Riffelung oder einer rutschfesten Beschichtung, ausgeführt und/oder Markierungsfeldern versehen sein, so daß die Behälter 14 definiert auf der Auflagefläche 12 festlegbar sind.

Dargestellt und beschrieben sind Behälter 14, die relativ schmal sind und entsprechend schmale Auflageflächen 12 haben. Es wäre auch denkbar, breitere Behälter 14 vorzusehen, die dann mehr als eine Auflagefläche 12 benötigen. Ein solcher Behälter 14 wird dann auf zwei oder mehr als zwei Auflageflächen 12 aufliegen. Die einzelnen Wägesysteme 18 könnten dann so aufeinander abgestimmt oder miteinander gekoppelt werden, daß ein effektiver Schaltvorgang oder Steuerbefehl erst ausgelöst wird, wenn beide oder alle wirksamen Schaltelemente 19 betätigt worden sind.

Bei dem Ausführungsbeispiel des Federparallelogramms 20 nach Fig. 6 sind dessen erste und dessen zweite Seite 21, 22 jeweils von einem Befestigungsteil gebildet, die jeweils aus zwei Halteplatten 21a, 21b bzw. 22a, 22b bestehen, zwischen denen die oberen Blattfedern 23', 23" und die unteren Blattfedern 24', 24" eingespannt sind. Die Halteplatten 21b und 22a, die zwischen den Blattfedern 23', 23" und 24', 24" angeordnet sind, bestimmen mit ihrer Dicke die Länge der ersten Seite 21 bzw. der zweiten Seite 22 des Federparallelogramms 20. Die untere Halteplatte 22b ist als ein Befestigungsprofil ausgebildet, das zur Verankerung des Federparallelogramms 20 auf dem Untergrund 30 dient. Die Halteplatten und die Blattfedern sind im Bereich der ersten Seite 21 und der zweiten Seite 22 des Federparallelogramms 20 jeweils an vier Stellen mittels Stiften 38 und Schrauben 40 miteinander verstiftet und verschraubt. Die Stifte 38 garantieren, daß das obere Federnpaar 23', 23" und das untere Federnpaar 24', 24" gleich lang sind und daß sie sich nicht verschieben können, was eine Voraussetzung für die Funktion des Federparallelogramms 20 ist. Das in Fig. 6 gezeigte Federparallelogramm 20 stellt einen Kernmodul des Wägesystems 18 dar. Der Kernmodul kann mit der ersten Seite 21 des Federparallelogramms 20, genauer gesagt über die obere Halteplatte 21a fest mit der Auflagefläche 12 verbunden sein, wie es in den Fig. 3 und 4 gezeigt ist. Der Behälter 14 stützt sich dann nur auf der ersten Seite 21 des Federparallelogramms 20 ab.

Zur Erzielung einer höheren Stabilität bei einseitiger Gewichtsverteilung in dem Behälter 14 wird die Ausführungsform nach Fig. 7 eingesetzt. Bei dieser Ausführungsform ist das Federparallelogramm 20 zusätzlich mit zwei Auflagestreben 42, 44 versehen, die mittels einer Achse 46, die durch die untere Halteplatte 21b hindurchgeführt ist, an der ersten Seite 21 des Federparallelogramms 20, vorzugsweise schwenkbar, befestigt sind. Die Auflagefläche 12 oder der Behälter 14, in Fig. 7 jeweils nicht dargestellt, liegt in der Mitte auf der Oberseite der oberen Halteplatte 21a sowie auf je zwei Flächen beiderseits der ersten Seite 21 auf den Auflagestreben 42, 44 auf. Durch diese Ausbildung ist eine Verteilung der Last über die ganze Fläche der Unterseite des Behälters 14 oder der Auflagefläche 12 gewährleistet. Zudem wird durch die Auflagestreben 42, 44 eine höhere Stabilität bei einseitiger Gewichtsverteilung erzielt. Statt der beiden Auflagestreben 42, 44 würde es ausreichen, nur eine dieser Auflagestreben zu verwenden. Jede Auflagestrebe 42, 44 weist beiderseits der ersten Seite 21 und mit gleichem Abstand von derselben jeweils eine Auflagestelle 42', 42" bzw. 44', 44" auf. Dieser gleiche Abstand ist dabei so gewählt, daß er etwa gleich der gegenseitigen Distanz der ersten und der zweiten Seite 21, 22 des Federparallelogramms 20 ist.

Ein Schieber 32, der bei den Ausführungsformen nach den Fig. 6 und 7 nicht dargestellt ist, kann dabei gleichwohl verwendet werden. Er würde wie in der Darstellung in Fig. 5 jeweils die obere Blattfeder und die ihr benachbarte untere Blattfeder auf dem Untergrund 30 abstützen und wäre selbst auf dem Untergrund 30 verschiebbar abgestützt. Er könnte dafür an seinen beiden Enden jeweils ein paar benachbarter Schlitze haben, die jeweils die obere bzw. die benachbarte untere Blattfeder verschiebbar aufnehmen.

Um das Wägesystem 18 der hier beschriebenen Überwachungsanordnung auf das Gewicht des Behälters 14 und auch auf das Gewicht des Inhalts 16, der in dem Behälter 14 zu lagern ist (z.B. Massenteile wie Schrauben), abzustimmen, sind, wenn kein Schieber 32 verwendet werden soll, die Federkennungen der Blattfedern 23', 23", 24' und 24" so gewählt, daß sie den Behälter 14, gegebenenfalls dessen Auflagefläche 12 und die Mindestmenge M des Inhalts 16 des Behälters tragen, ohne nach unten durchgebogen zu werden, wie es in Fig. 3 gezeigt ist. Zweckmäßig wird aber zusätzlich ein Schieber 32 verwendet, um das Wägesystem 18 auf das Gewicht des Behälters 14 und auch auf das Gewicht seines Inhalts 16 abzustimmen. Der Schieber 32 ermöglicht, eine exakte Abstimmung vorzunehmen und weiter die gewünschte Mindest- oder Restmenge M des Inhalts 16 in dem Behälter 14 auf den auszulösenden Schaltvorgang abzustimmen. In Fig. 3 ist das Wägesystem 18 mit Hilfe des Schiebers 32 so eingestellt worden, daß das Federparellogramm 20 die Kraft für die Mindestmenge M des Inhalts 16 des Behälters 14 aufbringt, so daß sich dann der Behälter 14 bei Überschreiten der Mindestmenge M seines Inhalts 16 abwärts bewegt, wie es in Fig. 4 gezeigt ist, und sich bei wieder abnehmender Menge seines Inhalts 16 aufwärts bewegt und bei Erreichen der Mindestmenge M seines Inhalts 16 das Schaltelement 19 betätigt, wie es in Fig. 3 gezeigt ist, damit der Schaltvorgang oder Steuerbefehl ausgelöst wird. Mit letzterem kann veranlaßt werden, daß der Inhalt 16 des Behälters wieder aufgefüllt wird. Für das Befüllen des Behälters 14 mit der Höchstmenge seines Inhalts 16 könnte unterhalb des Schaltelements 19 ein weiteres Schaltelement vorgesehen sein (in den Fig. 3 und 4 nicht dargestellt), mit welchem ein weiterer Schaltvorgang oder Steuerbefehl ausgelöst wird, um das Nachfüllen des Behälters 14 zu unterbrechen.

Die Gewichtsabstufungen, die für die Erfassung der Mindestmenge M des Inhalts 16 des Behälters 14 nötig sind und die in den hier gezeigten Ausführungsbeispielen in einem Bereich von 0,15 kg liegen können, können durch gezieltes Auslegen der Blattfedern 23', 23", 24', 24", d.h. durch Variieren der Parameter Breite, Länge, Höhe und/oder Dicke der Blattfedern und der Halteplatten 21b und 22a des Federparallelogramms 20 erreicht werden.

Die Feinabstimmung kann durch Einstellen der Lage des Schiebers 32 oder der Lage des Schaltelements 19 erfolgen. Das Schaltelement 19 kann an dem Pfosten 36 zu diesem Zweck höhenverstellbar angebracht sein. Durch Verfahren des Schiebers 32 wird die wirksame Länge der Blattfedern 23', 23", 24', 24" zwischen dem Schieber 32 und der ersten Seite 21 des Federparallelogramms 20 eingestellt. Der Schieber 32 ist zweckmäßig aus PVC und wird durch einen Schlitz (nicht dargestellt) in einem den Untergrund 30 bildenden Bodenblech zusätzlich geführt. In der eingestellten Position kann der Schieber 32 durch eine Rändelschraube (nicht dargestellt) festgelegt werden.

Der in der Beschreibung und in den Ansprüchen verwendete Begriff "Parallelogramm" (Meyers Lexikon der Technik und der exakten Naturwissenschaften, 1970, 3. Bd., S. 1902 und 1903) beinhaltet definitionsgemäß ein Viereck, bei dem zwei sich gegenüber liegende Seiten parallel und gleich lang sind. Weiter sind in einem Parallelogramm, die sich diagonal gegenüberliegenden Gegenwinkel gleich groß, je zwei benachbarte Winkel ergänzen sich zu 180°. Ein Parallelogramm mit vier gleichen (d.h. mit rechten) Winkeln nennt man ein Rechteck, ein Parallelogramm mit vier gleichen Seiten einen Rhombus oder eine Raute. Ein Parallelogramm mit vier rechten Winkeln und vier gleich langen Seiten nennt man ein Quadrat. Alle vorgenannten Arten von Vierecken sollen durch den hier verwendeten Begriff "Parallelogramm" umfaßt sein. So betrachtet ist der Teil des Federparallelogramms 20 zwischen dem Schieber 32 und der ersten Seite 21 in Fig. 3 ein Rechteck (mit vier rechten Winkeln) und in Fig. 4 ein Parallelogramm (bei dem sich diagonal gegenüberliegende Winkel gleich groß sind).

## Patentansprüche

1. Anordnung zur Überwachung des Füllungsgrades von einzelnen Behältern in einem Lagersystem, mit einem jedem einzelnen Behälter zugeordneten Wägesystem, auf dem der Behälter aufliegt und dem ein Schaltelement zugeordnet ist, das ab einer bestimmten Menge des Inhalts des Behälters einen Schaltvorgang oder Steuerbefehl auslöst, **dadurch gekennzeichnet, daß** das Wägesystem (18) von einem Federparallelogramm (20) gebildet ist, das mit einer ersten Seite (21) an der Unterseite des Behälters (14) oder an einer für die Abstützung des Behälters vorgesehenen Auflagefläche (12) befestigt ist und mit einer der ersten Seite (21) gegenüberliegenden zweiten Seite (22) auf einem festen Untergrund (30) verankert ist und das so ausgebildet oder einstellbar ist, daß es die Kraft für den Behälter (14) mit einer Mindestmenge (M) von dessen Inhalt (16) aufbringt, so daß sich der Behälter (14) bei Überschreiten der Mindestmenge seines Inhalts (16) abwärts bewegt und bei wieder abnehmender Menge seines Inhalts (16) aufwärts bewegt und bei Erreichen der Mindestmenge seines Inhalts (16) das Schaltelement (19) betätigt, damit der Schaltvorgang oder Steuerbefehl ausgelöst wird.

2. Anordnung nach Anspruch 1, **dadurch gekennzeichnet, daß** das Federparallelogramm (20) wenigstens eine obere und wenigstens eine untere Blattfeder (23', 24') aufweist, die eine dritte bzw. vierte Seite (23, 24) des Federparallelogramms (20) bilden und deren Enden an der ersten bzw. zweiten Seite (21, 22) befestigt und starr miteinander verbunden sind.

3. Anordnung nach Anspruch 2, **dadurch gekennzeichnet, daß** das Federparallelogramm (20) zwei zueinander parallele obere Blattfedern (23', 24") und zwei zueinander parallele untere Blattfedern (24', 24") aufweist.

4. Anordnung nach Anspruch 2 oder 3, **dadurch gekennzeichnet, daß** die erste und die zweite Seite (21, 22) des Federparallelogramms (20) jeweils von einem Befestigungsteil gebildet sind, die jeweils aus zwei Halteplatten (21a, 21b; 22a, 22b) bestehen, zwischen denen die obere(n) Blattfeder(n) (23', 23") bzw. die untere(n) Blattfeder(n) (24', 24") eingespannt ist (sind), wobei die Dicke der Halteplatten (21b, 22a) die Länge der ersten bzw. zweiten Seite (21, 22) des Federparallelogramms (20) festlegt.

5. Anordnung nach einem der Ansprüche 1 bis 4, **gekennzeichnet durch** einen zwischen den Seiten des Federparallelogramms (20) angeordneten Schieber (32).

6. Anordnung nach Anspruch 5, **dadurch gekennzeichnet, daß** der Schieber (32) zwischen der ersten und der zweiten Seite (21, 22) des Federparallelogramms (20) und auf dem Untergrund (30) verschiebbar ist und die dritte Seite (23) und die vierte Seite (24) des Federparallelogramms (20) auf dem Untergrund (30) abstützt.

7. Anordnung nach einem der Ansprüche 1 bis 6, **dadurch gekennzeichnet, daß** der Behälter (14) oder dessen Auflagefläche (12) ein mit dem Schaltelement (19) in Wirkverbindung bringbares Betätigungsteil (34) aufweist und daß das Schaltelement (19) fest, aber einstellbar mit dem Untergrund (30) verbunden ist.

8. Anordnung nach einem der Ansprüche 1 bis 7, **dadurch gekennzeichnet, daß** das Schaltelement (19) ein Taster oder ein Reed-Element ist.

9. Anordnung nach einem der Ansprüche 1 bis 8, **dadurch gekennzeichnet, daß** die Auflagefläche (12) des Behälters (14) als eine Platte mit nach unten und/oder nach oben abgebogenen Abkantungen (50) ausgeführt ist.

10. Anordnung nach Anspruch 9, **dadurch gekennzeichnet, daß** die Auflagefläche (12) jedes Behälters (14) mit einer rutschfesten Oberfläche ausgeführt und/oder mit Markierungsfeldern versehen ist, so daß der Behälter (14) definiert auf der Auflagefläche (12) festlegbar ist.

11. Anordnung nach einem der Ansprüche 1 bis 10, **dadurch gekennzeichnet, daß** die erste Seite (21) des Federparallelogramms (20) zusätzlich über wenigstens eine Auflagestrebe (42, 44) die Unterseite des Behälters (14) oder eine für die Abstützung des Behälters (14) vorgesehenen Auflagefläche (12) abstützt.

12. Anordnung nach Anspruch 11, **dadurch gekennzeichnet, daß** die Auflagestrebe (42, 44) beiderseits der ersten Seite (21) und mit gleichem Abstand von derselben zwei Auflagestellen (42', 42"; 44', 44") aufweist.

13. Anordnung nach Anspruch 12, **dadurch gekennzeichnet, daß** der Abstand etwa gleich der gegenseitigen Distanz der ersten und zweiten Seite (21, 22) des Federparallelogramms (20) ist.
